Europäisches Patentamt

European Patent Office

Office européen des brevets

(11) Numéro de publication: **0 319 411**
**A1**

# (12) DEMANDE DE BREVET EUROPEEN

(21) Numéro de dépôt: **88403023.0**

(22) Date de dépôt: **30.11.88**

(51) Int. Cl.⁴: **G 01 G 21/23**

(30) Priorité: **30.11.87 FR 8716562**

(43) Date de publication de la demande:
**07.06.89 Bulletin 89/23**

(84) Etats contractants désignés:
**BE DE ES FR GB IT NL**

(71) Demandeur: **LUTRANA**
**50 avenue du Président Kennedy**
**F-91170 Viry-Chatillon (FR)**

(72) Inventeur: **Balourdet, René**
**70 Rue Roger Alboy**
**F-93220 Gagny (FR)**

(74) Mandataire: **Robert, Jean-Pierre et al**
**CABINET BOETTCHER 23, rue la Boétie**
**F-75008 Paris (FR)**

(54) **Appareil de pesée à simple châssis.**

㉗ L'invention concerne un appareil de pesée comprenant un cadre support (2), des pieds (4) par lesquels l'appareil repose sur le sol et des capteurs (1) de forces intercalés entre le cadre (2) et les pieds (4), les pieds étant constitués par un axe (6) solidaire du capteur reposant sur une semelle (7) par l'intermédiaire d'organes de roulement (19) et par un fourreau (11) souple retenant les organes de roulement et assurant la liaison souple entre l'axe (4) et la semelle (7). De tels pieds (4) permettent aux capteurs (1) d'être sollicités convenablement compte tenu des déformations éventuelles du cadre support (2).

Fig. 1

EP 0 319 411 A1

Bundesdruckerei Berlin

**Description**

<div align="center">

**Appareil de pesée à simple châssis**

</div>

L'invention concerne un appareil de pesée comprenant un cadre de support de la charge à peser et des moyens de support de ce cadre par lesquels l'appareil repose sur le sol, des capteurs de forces étant intercalés entre le cadre et lesdits moyens de support.

Certains appareils de pesée sont constitués par deux châssis métalliques mécanosoudés, mobiles l'un par rapport à l'autre et reliés par des capteurs de forces, par exemple par des capteurs de forces perpendiculaires aux plans parallèles des châssis. Ces capteurs sont reliés à une unité de calcul électronique comportant un écran d'affichage. L'utilisation de tels capteurs nécessite une construction d'appareil de pesée à deux châssis rigides de façon à solliciter les capteurs de forces suivant une direction perpendiculaire au plan d'appui. Dans un cas contraire, des efforts parasites peuvent venir fausser les mesures.

L'invention a pour but principal de supprimer un châssis tout en permettant aux capteurs de forces d'être sollicités convenablement, c'est-à-dire suivant une direction sensiblement perpendiculaire au plan du châssis de support de charge.

A cet effet, l'invention a pour objet un appareil de pesée constitué par un cadre de support de la charge à peser et par des pieds indépendants par lesquels l'appareil repose sur le sol, des capteurs de forces étant intercalés entre le cadre et lesdits pieds, dans lequel chaque pied comprend un axe solidaire du capteur reposant sur une semelle d'appui inférieure par l'intermédiaire d'un organe de roulement compris entre deux surfaces planes et par un organe de liaison souple de la semelle à l'axe en forme de fourreau de retenue de l'organe de roulement.

De tels pieds présentent l'avantage de conserver aux capteurs une sollicitation convenable, c'est-à-dire se réduisant à une force d'appui simple, car toute inclinaison de l'axe du pied solidaire du capteur, qui pourrait apparaître lors d'un gauchissement du cadre sous la charge ou à cause d'un sol qui n'est pas parfaitement plan, ou tout appui un peu incliné de la semelle du pied sur le sol, n'introduit aucune contrainte parasite dans le capteur. En effet, le fourreau souple autorise un mouvement relatif du capteur par rapport à la semelle d'appui et l'organe de roulement autorise des modifications dans l'inclinaison du capteur par rapport à cette semelle sans que celles-ci engendrent des couples de flexion ou de torsion dans le capteur. Ce dernier est dans tous les cas sollicité par une force d'appui simple. L'élimination des contraintes parasites rend aux mesures toute leur fiabilité.

De manière préférée, la semelle est constituée par une plaque d'extrémité d'un manchon cylindrique dans lequel est logé le fourreau souple, ce dernier comportant à sa base une collerette extérieure pour sa retenue dans le manchon et à son autre extrémité axiale, un bourrelet intérieur coopérant avec une gorge de l'axe susdit. Ainsi on réalise une liaison souple entre l'axe et le manchon et une étanchéité isolant l'élément de roulement de l'atmosphère extérieure. En outre, l'organe de roulement comporte une pluralité de billes coplanaires disposées entre la semelle et un disque intermédiaire sur lequel repose la surface extrême de l'axe conformée en portion de sphère.

Selon une variante des réalisations susdites, entre la semelle et la pluralité de billes coplanaires est intercalé un disque inférieur logé dans le fourreau souple. Ainsi seul le disque doit subir un traitement de thermique de durcissement et un traitement de surface permettant ainsi d'éviter de soumettre à ce traitement, soit la semelle ce qui complique son usinage ultérieur, soit l'ensemble du manchon, ce qui introduit des contraintes et des déformations nécessitant des reprises d'usinage. Par ailleurs, le fourreau souple est en matière plastique, par exemple en polyuréthane, et présente des cannelures axiales extérieures.

Le choix du matériau et ces cannelures permettent d'atteindre le juste compromis à réaliser entre la souplesse de la liaison et sa nécessaire rigidité pour que le support de l'appareil soit stable. On parvient ainsi à une liaison qui est souple pour des déplacements relatifs de faible amplitude, mais qui s'oppose à des déplacements de plus grande amplitude.

Enfin, on a ménagé une protection de chaque pied de l'appareil qui consiste en une plaque perpendiculaire à son axe et pourvue d'un orifice dans lequel est logé le pied, cette plaque étant située au voisinage de la semelle et reliée au châssis.

L'invention sera mieux comprise à l'aide de la description détaillée ci-après faite en référence aux dessins annexés, la description et les figures n'étant donnés qu'à titre d'exemples indicatifs et non limitatifs:

- La figure 1 représente une vue en coupe axiale du pied d'un appareil de pesée selon l'invention, relié à un capteur de forces et comportant un seul organe de roulement,

- La figure 2 représente une vue identique à celle de la figure 1, le pied comportant une pluralité d'organes de roulements intercalés entre deux disques,

- la figure 3 représente une vue de dessus du pied de l'appareil de pesée relié au capteur de forces, selon l'invention.

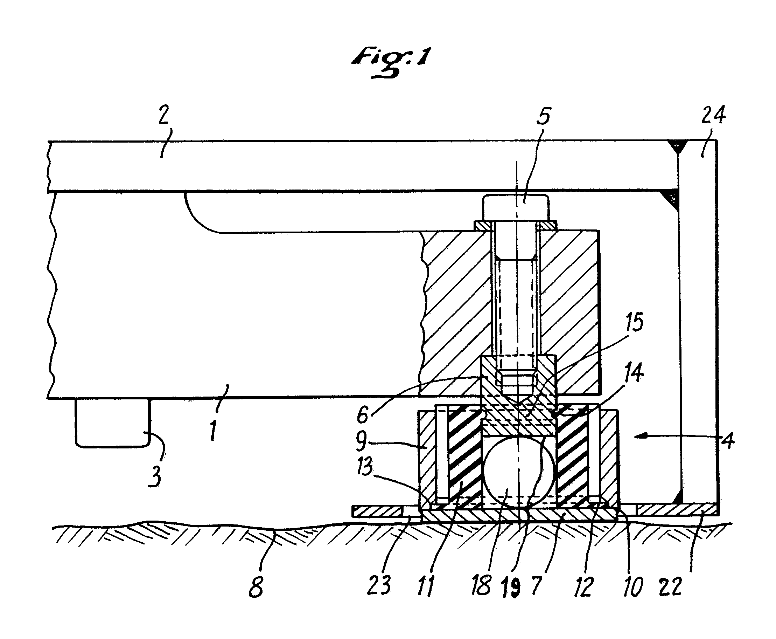

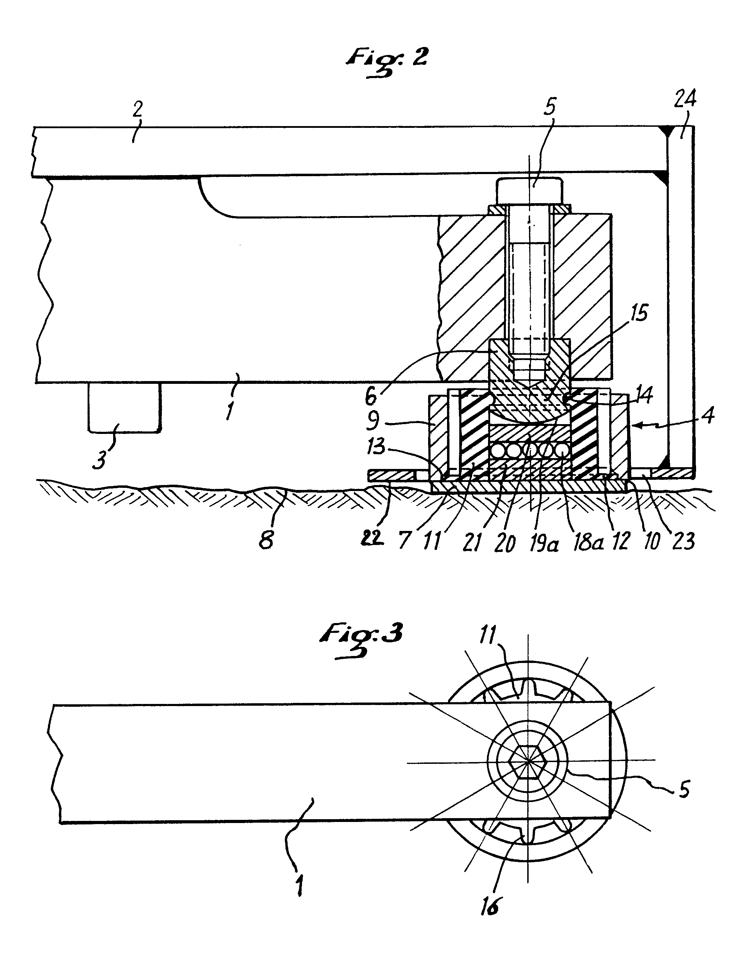

Les figures 1, 2 et 3 montrent un capteur de forces 1 attelé à un châssis d'appareil de pesée 2 par une vis de fixation 3. Un pied 4 du châssis 2 équipé du capteur est constitué par un axe 6 fixé au capteur par une vis 5, par une semelle 7 reposant sur le sol 8 et qui forme la plaque d'extrémité d'un manchon cylindrique 9. La plaque d'extrémité est soudée au manchon en 10. Le manchon 9 contient ajusté dans son évidement intérieur et reposant sur la semelle 7 un fourreau 11 en matière plastique souple, par exemple en polyuréthane. Le fourreau est maintenu par une collerette 12 ménagée dans sa partie inférieure. Cette collerette vient se loger élastiquement lors de la mise en place du fourreau dans le manchon, dans un espace 13 prévu à cet effet à l'intérieur du manchon dans sa partie inférieure. Le fourreau présente en outre dans sa partie supérieure, un bourrelet intérieur 14 coopérant avec une gorge 15 de l'axe 6, et des cannelures 16 axiales réparties régulièrement sur sa surface extérieure. A l'intérieur du fourreau est placée une bille d'acier 18 traité (figure 1) reposant directement sur la semelle 7, sur laquelle s'appuie une face plane 19 de l'axe 6 (bien entendu, la semelle et l'axe ont subi dans ce cas un traitement de surface approprié). Un autre mode de réalisation de l'organe de roulement est représenté à la figure 2, il s'agit d'une pluralité de billes coplanaires 18a intercalées entre deux disques plans d'acier 20,21 traité, l'ensemble étant logé à l'intérieur du fourreau entre la semelle 7 et l'axe 6. Ce dernier repose par une face en portion de sphère 19a sur le disque supérieur 20. Ce mode de réalisation de l'organe de roulement permet une plus grande répartition du poids sur la semelle 7 et facilite le déplacement et l'inclinaison relative de l'axe par rapport à la semelle. Pour des raisons pratiques de fabrication, on peut intercaler un disque du type susdit entre la semelle et la bille ou les billes coplanaires.

L'axe 6 présente, ménagée dans sa partie inférieure et à proximité de sa face d'appui, une gorge 15 dans laquelle vient se loger le bourrelet 14 du fourreau en se déformant élastiquement, on obtient ainsi une liaison souple entre l'axe 6 et l'ensemble manchon, fourreau, organes de roulement.

En outre, cette liaison offre d'une part une étanchéité entre l'environnement extérieur et les organes de roulement contenus dans le fourreau, et d'autre part, une liaison entre le pied et le capteur, qui lors du soulèvement et du déplacement de l'appareil de pesée ne se désolidarisent pas.

Une plaque metallique 22 perpendiculaire à l'axe du pied 4 est prévue pour la protection de chaque pied. Elle comporte un orifice 23 dans lequel est logé le pied et est située au voisinage de la semelle 7. Les plaques sont fixées par soudure au retour 24 du châssis 2.

Le capteur 1 est un capteur de forces et plus précisément un capteur sensible aux forces ayant une direction perpendiculaire à la surface d'appui, constituée par le cadre support. Le capteur est relié à une unité de calcul électronique comportant un écran d'affichage (non représentés). Le châssis 2 est une structure mécanosoudée . Tous les organes d'appuis, tels les billes, les disques ou la semelle, l'axe sont en acier et ont subi des traitements thermiques de durcissement.

L'appareil de pesée ne possède donc qu'un seul châssis. Le contact de ce châssis avec le sol au moyen des pieds tels que décrits ci-dessus, permet une sollicitation des capteurs de forces exempte d'efforts parasites qui faussent les mesures. En effet, si le sol n'est pas rigoureusement plan et régulier, la semelle peut s'incliner par rapport à l'axe du fait de la liaison souple et articulée. Par ailleurs, si le cadre se déforme sous l'effet de la charge à peser, le mouvement de l'axe par rapport à la semelle est également possible. On comprend en effet, pour ce qui concerne le mode de réalisation de la figure 2, que ce mouvement est transmis au disque supérieur par le roulement sur ce disque de la tête sphérique de l'axe, ce disque étant libre de se déplacer latéralement sur la couche de billes 18a par rapport à la semelle, tout en étant retenu par le fourreau souple.

Les moyens mis en oeuvre dans l'invention n'imposent plus de cadre extrêmement rigide, et permettent donc la construction d'une bascule plus légère. Il est même avantageux de disposer d'un châssis relativement déformable pour prendre en compte les irrégularités du terrain sur lequel il repose et éviter le boîtement du châssis.

L'invention trouve une application intéressante dans le domaine des instruments de pesage.

**Revendications**

1. Appareil de pesée constitué par ur cadre support (2) de la charge à peser et par des pieds (4) indépendants de support de ce cadre (2) par lesquels l'appareil repose sur le sol, des capteurs de forces (1) étant intercalés entre le cadre et lesdits pieds, caractérisé en ce que chaque pied (4) comprend un axe (6) solidaire du capteur reposant sur une semelle d'appui (7) inférieure par l'intermédiaire d'au moins un organe de roulement (18,18a) compris entre deux surfaces planes et un organe de liaison souple (11) de la semelle à l'axe en forme de fourreau de retenue de l'organe de roulement.

2. Appareil de pesée selon la revendication 1, caractérisé en ce que la semelle (7) est constituée par une plaque d'extrémité d'un manchon cylindrique (9) dans lequel est logé le fourreau souple (11).

3. Appareil de pesée selon la revendication 2, caractérisé en ce que le fourreau souple (11) comporte à sa base une collerette extérieure (12) pour sa retenue dans le manchon (9) et à son autre extrémité axiale un bourrelet (14) intérieur coopérant avec une gorge (15) de l'axe susdit.

4. Appareil de pesée selon la revendication 3, caractérisé en ce que le fourreau (11) est en matière plastique souple, par exemple en polyuréthane et comporte des cannelures périphériques axiales (16).

5. Appareil de pesée selon l'une quelconque des revendications précédentes, caractérisé en ce que l'organe de roulement comporte une pluralité de billes (18a) coplanaires disposées entre la semelle (7) et un disque (20) intermédiaire sur lequel repose la surface extrême (19a) de l'axe (6) conformée en portion de sphère.

6. Appareil de pesée selon la revendication 5, caractérisé en ce que entre la pluralité de billes coplanaires (18a) et la semelle (7) est disposé un disque inférieur (21) logé dans le fourreau souple (11).

7. Appareil selon l'une quelconque des revendications précédentes caractérisé en ce que l'organe de roulement est une bille unique (18), la surface extrême de l'axe (6) étant plane.

8. Appareil de pesée selon l'une quelconque des revendications précédentes, caractérisé en ce que à chaque pied est ménagée une plaque de protection constituée par une plaque (22) perpendiculaire à l'axe du pied comprenant un orifice (23) dans lequel est logé le pied (4), la plaque (22) étant située au voisinage de la semelle (7) et reliée au châssis (2).

*Fig.1*

EP 0 319 411 A1

Fig. 2

Fig. 3

# RAPPORT DE RECHERCHE EUROPEENNE

Numero de la demande

EP 88 40 3023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 554 987 (B.N. DILLON)<br>* Colonne 4, lignes 50-57,63-64; colonne 8, lignes 22-24,33-35; figures 2,7,8 *<br>--- | 1,7 | G 01 G 21/23 |
| Y | EP-A-0 065 176 (HOTTINGER BALDWIN HESSTECHNIK GmbH)<br>* Page 7, lignes 12-16; page 10, lignes 1-12; figures 1,4 * | 1,7 | |
| A | --- | 4,6 | |
| A | US-A-4 561 512 (H. TRAMPOSCH)<br>* Colonne 3, lignes 61-64; figure 4 *<br>--- | 2 | |
| A | ELECTRONIQUE INDUSTRIELLE, no. 10, 15 février 1981, pages 76-81, Paris, FR; "Le pesage"<br>* Page 78, alinéa 4; figure 4e *<br>--- | 5 | |
| A | US-A-3 123 166 (E.W. SCHELLENTRAGER)<br>* Colonne 3, lignes 51-61; figure 4 *<br>--- | 8 | DOMAINES TECHNIQUES RECHERCHES (Int. Cl.4) |
| A | US-A-4 258 810 (W.C. SUSOR)<br>* Résumé; figure 2 *<br>----- | 1 | G 01 G |

Le présent rapport a été établi pour toutes les revendications

| Lieu de la recherche | Date d'achèvement de la recherche | Examinateur |
|---|---|---|
| LA HAYE | 07-03-1989 | GANCI P.A. |